# EUROPEAN PATENT APPLICATION

(11) **EP 4 751 953 A1**
(43) Date of publication of application: **03.06.2026**
(21) Application number: 25219634.0
(22) Date of filing: 01.12.2025
(51) Int. Cl.: B60J 11/02

(54) **ROAD VEHICLE WITH ROLL-UP PHOTOVOLTAIC PANEL**

(30) Priority: 02.12.2024 IT 202400027225
(71) Applicant: FERRARI S.p.A., 41100 Modena (IT)
(72) Inventor: LUMINI, Sandro, 41100 MODENA (IT)
(74) Representative: Studio Torta S.p.A.

(57) **Abstract**

A road vehicle is provided with a support frame (2) defining at least part of a lower floor (3) of the road vehicle, a passenger compartment (4), an outer body (5), and a roll-up photovoltaic panel (16) movable between a retracted position, in which the photovoltaic panel (16) is substantially arranged inside a housing chamber (11) obtained on or inside the outer body (5), and an extracted position, in which the photovoltaic panel (16) is substantially arranged outside the housing chamber (11) and extends along at least part of the passenger compartment (4) and/or the outer body (5).

## Description

### CROSS-REFERENCE TO RELATED APPLICATIONS

This patent application claims priority from Italian patent application no. 102024000027225 filed on December 2, 2024, the entire disclosure of which is incorporated herein by reference.

### TECHNICAL FIELD

The present invention relates to a road vehicle.

### BACKGROUND

In particular, the present invention relates to a road vehicle of the type comprising a support frame defining at least part of a lower floor of the road vehicle; a passenger compartment mounted on the support frame and protruding upwards from the lower floor; and an outer body configured to delimit the passenger compartment and the front and rear compartments obtained at the front and at the rear of the passenger compartment.

Known road vehicles of the type described above have some drawbacks mainly deriving from the fact that being parked in the sun for many hours a day causes overheating of the passenger compartment and aging and deterioration of the interior coverings of the passenger compartment.

### SUMMARY

The object of the present invention is to provide a road vehicle that is free from the aforesaid drawbacks and is simple and inexpensive to produce.

According to the present invention, a road vehicle is provided as claimed in the appended claims.

### BRIEF DESCRIPTION OF THE DRAWINGS

The present invention will now be described with reference to the accompanying drawings, which illustrate a non-limiting example of embodiment thereof, wherein:
Fig. 1 is a schematic side view, with parts removed for clarity, of a preferred embodiment of the road vehicle of the present invention;
Fig. 2 is a schematic plant view, with parts removed for clarity, of the road vehicle of Fig. 1; and
Fig. 3 is a schematic perspective view, with parts removed for clarity, of a detail of the road vehicle of Figs. 1 and 2.

### DESCRIPTION OF EMBODIMENTS

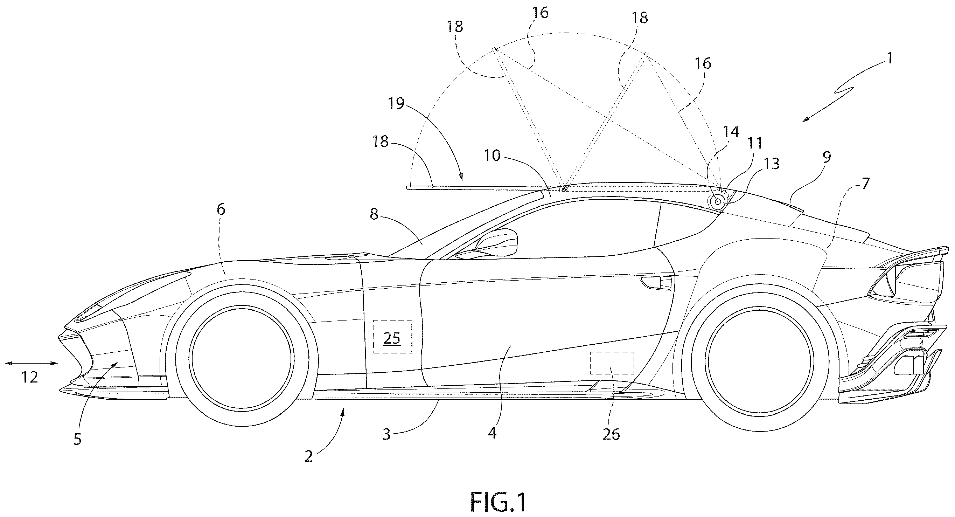

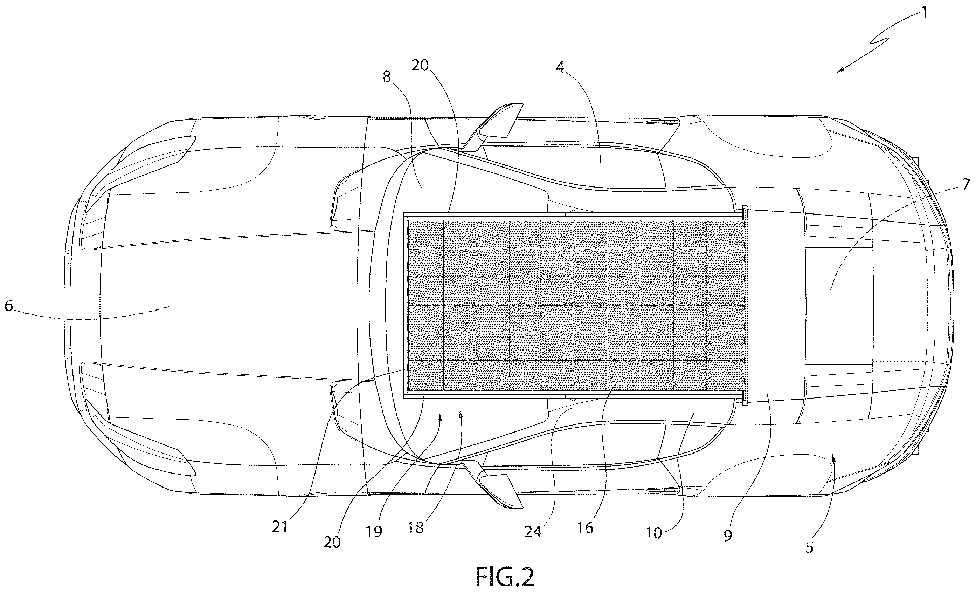

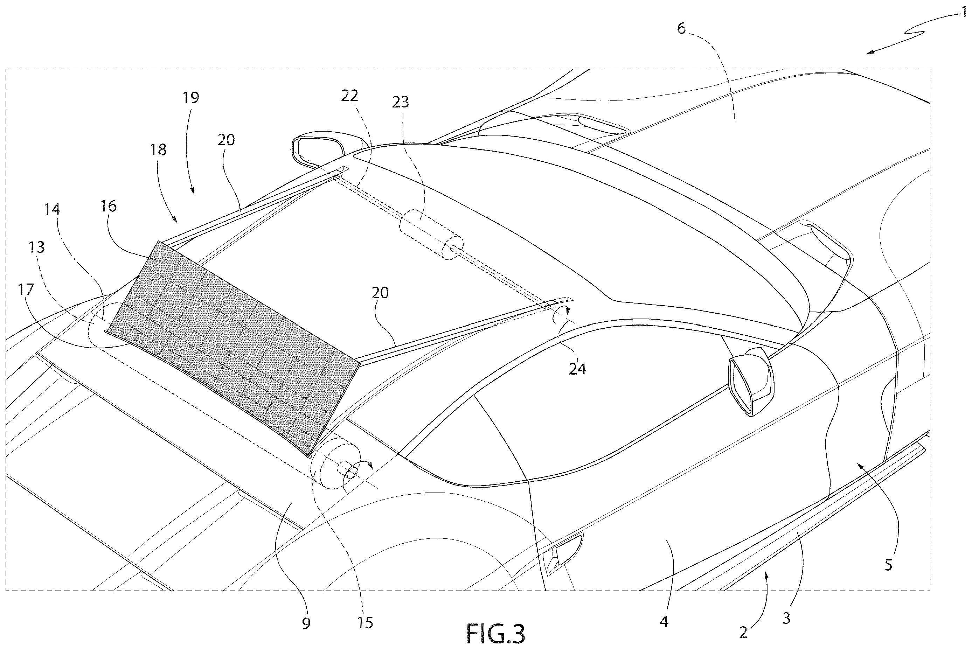

With reference to Figs. 1, 2, and 3, the reference number 1 indicates, as a whole, a road vehicle comprising a support frame 2 defining at least part of a lower floor 3 of the vehicle 1, a passenger compartment 4 mounted on the frame 2 and protruding upwards from the floor 3, and an outer body 5.

The vehicle 1 further comprises a front compartment 6 obtained inside the body 5 at the front of the passenger compartment 4, and a rear compartment 7 obtained inside the body 5 at the rear of the passenger compartment 4.

The passenger compartment 4 is limited by a front windshield 8, by a rear window 9, and by an upper roof 10 defining part of the body 5.

The body 5 is configured to define a housing chamber 11, which is obtained, in this case, in the area of a rear end of the roof 10, extends transversely to a travel direction 12 of the vehicle 1, and is obtained, in this case, under an upper surface of the roof 10.

According to a variant, not shown, the housing chamber 11 is obtained in the area of a front end of the roof 10.

The chamber 11 internally houses a winding roller 13 mounted so as to rotate around its longitudinal axis 14 that is transverse to the direction 12 under the thrust, in this case, of an electric motor 15 housed inside the chamber 11 coaxially to the axis 14.

A first free end of a roll-up photovoltaic panel 16, which extends through a slot 17 obtained in the roof 10 and which has a second free end fixed to a dragging member 18 of a driving assembly 19, is fixed to the roller 13.

The member 18 is U-shaped, and comprises two support rods 20, which are parallel to each other and to the direction 12, and are connected to each other by a crosspiece 21 parallel to the axis 14 fixed to the panel 16.

The rods 20 of the member 18 are connected with the free ends of the output shaft 22 of an electric motor 23, which rotates the member 18 around a rotation axis 24 parallel to the axis 14 obtained in the area of a front end of the roof 10.

The member 18 is rotated by the motor 23 around the axis 24 according to an angle of substantially 180° so as to move the panel 16 between a retracted position, in which the panel 16 is wound on the roller 13 and is substantially arranged inside the camera 11, and an extracted position, in which the panel 16 extends outside the chamber 11 and along the roof 10 and protrudes at the front from the roof 10 above at least part of the windshield 8.

With regard to the above, it should be specified that:
the vehicle 1 is provided with an electronic control unit 25 configured to selectively control the operation of the motors 15 and 23;
the panel 16 is moved between its retracted position and its extracted position when the vehicle 1 is parked and, preferably but not necessarily, in response to a signal coming from a detection device (not shown), which is connected with the unit 25, and is configured to detect the weather conditions and/or the presence of obstacles along the path of the photovoltaic panel 16 between the aforesaid retracted and extracted positions; and
the electrical energy produced by the panel 16 is stored in a power supply battery 26 of the vehicle 1 connected with the panel 16.

The vehicle 1 offers some advantages mainly deriving from the fact that, when the vehicle 1 is electric or hybrid, the electrical energy produced by the panel 16 while stationary ensures that the vehicle 1 has a relatively high autonomy and relatively low pollutant emissions while driving.

Moreover, the use of the panel 16 also has further advantages consisting in the fact that:
movement of the panel 16 into its extracted position ensures relatively low heating of the passenger compartment 4 when the vehicle 1 is parked in the sun; and
the inner coverings of the passenger compartment 4 are subject to exposure to solar radiation and, consequently, to relatively low aging and deterioration.

## Claims

1. A road vehicle comprising a support frame (2) defining at least part of a lower floor (3) of the road vehicle; a passenger compartment (4); and an outer body (5); and **characterized in that** it further comprises a roll-up photovoltaic panel (16) movable between a retracted position, in which the photovoltaic panel (16) is substantially arranged inside a housing chamber (11) obtained on or inside the outer body (5), and an extracted position, in which the photovoltaic panel (16) is substantially arranged outside the housing chamber (11) and extends along at least part of the passenger compartment (4) and/or the outer body (5).

2. The road vehicle according to claim 1 and further comprising a driving assembly (19) to move the photovoltaic panel (16) between its retracted position and its extracted position.

3. The road vehicle according to claim 2, wherein the driving assembly (19) comprises a dragging member (18) fixed to a free end of the photovoltaic panel (16) and a first operating device (23) to move the dragging member (18) between the retracted position and the extracted position of the photovoltaic panel (16).

4. The road vehicle according to claim 3, wherein the dragging member (18) is mounted in the area of an upper roof (10) of the passenger compartment (4) so as to rotate around a rotation axis (24) that is transverse to a travel direction (12) of the road vehicle.

5. The road vehicle according to claim 4, wherein the rotation axis (24) of the dragging member (18) is obtained in the area of a front end of the upper roof (10) of the passenger compartment (4).

6. The road vehicle according to any one of the preceding claims, wherein the housing chamber (11) is obtained in the area of an upper roof (10) of the passenger compartment (4).

7. The road vehicle according to claim 6, wherein the housing chamber (11) is obtained in the area of a rear end or of a front end of the upper roof (10) of the passenger compartment (4).

8. The road vehicle according to claim 7, wherein, when it is arranged in its extracted position, the photovoltaic panel (16) extends on the upper roof (10) of the passenger compartment (4) outside the passenger compartment (4).

9. The road vehicle according to claim 7 or 8, wherein when the housing chamber (11) is obtained in the area of a rear end of the upper roof (10) and the photovoltaic panel (16) is arranged in its extracted position, the photovoltaic panel (16) protrudes at the front of the passenger compartment (4) above at least part of a front windshield (8) of the passenger compartment (4).

10. The road vehicle according to any one of the preceding claims and further comprising a winding roller (13) fixed to an end of the photovoltaic panel (16) and mounted inside the housing chamber (11) so as to rotate around a rotation axis (14) that is transverse to a travel direction (12) of the road vehicle; and a second operating device (15) to move the winding roller (13) around the rotation axis (14) so as to wind/unwind the photovoltaic panel (16) on the/from the winding roller (13).

11. The road vehicle according to any one of the preceding claims and further comprising a power supply battery (26) connected to the photovoltaic panel (16) to store the electrical energy produced by the photovoltaic panel (16).

12. The road vehicle according to any one of the preceding claims and further comprising a detection device to detect the weather conditions and/or the presence of obstacles along the path of the photovoltaic panel (16) between said retracted and extracted positions; an electronic control unit (25) being configured to control the movement of the photovoltaic panel (16) between its retracted and extracted positions in response to a signal of said detection device.
